# EUROPEAN PATENT APPLICATION

(11) **EP 4 582 206 A1**
(43) Date of publication of application: **09.07.2025**
(21) Application number: 24219582.4
(22) Date of filing: 12.12.2024
(51) Int. Cl.: B23K 9/067, B23K 9/073, B23K 9/167

(54) **SYSTEM FOR INITIATING OR STABILIZING A WELDING ARC FOR GAS TUNGSTEN ARC WELDING TORCHES, AND LASER SYSTEM TO INITIATE OR STABILIZE A WELDING ARC**

(30) Priority: 21.12.2023 US 202363613083 P; 09.12.2024 US 202418974025
(71) Applicant: Illinois Tool Works Inc., Glenview IL 60025 (US)
(72) Inventor: LIU, Shuang, Glenview, IL 60025 (US); NOWAK, Albert Matthew, Glenview, IL 60025 (US)
(74) Representative: HGF

(57) **Abstract**

The present application relates to a system (100) to facilitate arc initiation and arc stabilization in gas tungsten arc welding (GTAW) operations. In particular, a GTAW system (100) employs a laser system (61) to generate a laser beam (65) and control the laser beam (65) on a focal point over the workpiece (78) to heat the workpiece (78) at a hotspot (18). This generates a metal plasma from a material of the workpiece (78), allowing power from the GTAW tool (16) to create and/or sustain an arc via the metal plasma between the electrode (40) and the workpiece (78).

## Description

### CROSS REFERENCE TO RELATED APPLICATIONS

This application is a Non-Provisional Patent Application claiming priority to U.S. Provisional Patent Application No. 63/ 613,083 entitled "Systems And Methods For Starting And Stabilizing A Welding Arc For Gas Tungsten Arc Welding Torches" filed December 21, 2023, which is herein incorporated by reference in its entirety.

### BACKGROUND

Gas tungsten arc welding (GTAW) is a popular manual arc welding process employing a non-consumable electrode to produce an arc used to weld. However, GTAW welding can be more complex and difficult than many other types of arc welding techniques (e.g., gas metal arc welding (GMAW)), especially for inexperienced welders. For example, conventional GTAW techniques require an operator to touch, or scratch, the surface of a workpiece to be welded to initiate an arc prior to welding. This technique requires application of high-power welding output to flow through the electrode, which can cause damage to the workpiece if the touch is not sufficiently brief or light. Furthermore, even after initiation, an arc may become extinguished during a welding operation if the arc is not sufficiently stable. Thus, there is a need for improved systems and techniques that allow for easier arc initiation and/or arc stabilization for GTAW welding operations.

### SUMMARY

The present disclosure relates generally to gas tungsten arc welding (GTAW) systems and methods. In particular, disclosed is a system for facilitating initiation of a welding arc for GTAW operations and/or stabilizing a welding arc during GTAW operations employing a laser system to generate a laser beam and control the laser beam on a focal point over the workpiece to control the arc . This generates a metal plasma from a material of the workpiece, allowing power from the GTAW tool to create and/or sustain an arc via the metal plasma between the electrode and the workpiece.

### DRAWINGS

FIG. 1 illustrates an example GTAW welding system employing a laser system, in accordance with aspects of this disclosure.
FIG. 2 illustrates a method initiating an arc for a GTAW welding system employing a laser system, in accordance with aspects of this disclosure.
FIG. 3 illustrates an example of another GTAW welding system employing a laser system, in accordance with aspects of this disclosure.
FIG. 4 illustrates shows example current and voltage waveforms associated with a HF power circuit and/or a power conversion circuitry, in accordance with aspects of this disclosure.
The figures are not necessarily to scale. Where appropriate, similar or identical reference numbers are used to refer to similar or identical components.

### DETAILED DESCRIPTION

The present disclosure describes systems and methods for gas tungsten arc welding (GTAW). In particular, a system is disclosed for initiating and/or stabilizing a welding arc for GTAW operations employing a laser system to generate and control a laser beam to focus on a workpiece to achieve a metal plasma column at a hotspot. This metal plasma column allows power from the GTAW tool to create and/or sustain an arc via the metal plasma between the electrode and the workpiece.

As used herein, the term "gas tungsten arc welding" (GTAW), also known as tungsten inert gas (TIG) welding, is a typically manual arc welding process employing a non-consumable tungsten electrode to produce an arc used to weld. The weld area is protected from oxidation or other contamination by use of a shielding gas (e.g., an inert gas, such as argon or helium). A filler metal can be used, though some welds (e.g., autogenous or fusion welds) do not require filler metal. A constant-current welding power supply produces electrical energy, which is conducted across the arc through a column of highly ionized gas and metal plasma. GTAW welding is used to weld thin sections of metal, such as stainless steel, aluminum, magnesium, copper alloys, etc.

However, GTAW welding can be more complex and difficult, especially for inexperienced welders, and can be slower than other welding techniques, even for veteran welders.

One such challenge is to consistently initiate a GTAW arc start. Among the ways to ignite an arc include scratch-start, lift-arc, and high frequency (HF) arc start. For example, a scratch-start is initiated when an operator touches, or scratches, a tungsten electrode on the workpiece to initiate the arc. The operator then lifts the electrode from the workpiece quickly to prevent the electrode from fusing with the workpiece. However, the electrode cannot be lifted too far from the workpiece, as too great a distance between the electrode and the workpiece would serve to extinguish the arc. The scratch-start is not a very user-friendly process, and to do it successfully requires a great deal of practice.

A lift-arc process requires an operator to touch the electrode to the workpiece, depress the foot pedal, and lift the electrode from the workpiece to form an arc. Lift-arc can be a more forgiving process and easier to use, but the chance remains that the electrode will fuse to the workpiece, which can cause tungsten inclusions in the resulting weld and may contaminate the tungsten. A HF arc start uses HF energy to ignite the arc without making contact with the workpiece, but the HF energy may disrupt sensitive electronics within the work environment. As an example, sensitive facilities, such as nuclear plants, hospitals, etc., may not allow HF energy use.

A GTAW arc start assisted by laser energy, as disclosed herein, provides a contactless, or a "touchless", arc start solution, capable of igniting an arc between the electrode and the workpiece without requiring the operator to contact, or scratch, the workpiece. The arc is ignited by way of a metal plasma that is generated by heat from laser irradiation applied to the workpiece. The hotspot generated on the workpiece by the laser energy has the added benefit of making sourcing electrons easier for the arc start.

Advantageously, disclosed systems and methods of applying laser irradiation to the workpiece to generate a metal plasma in the presence of the tungsten electrode initiates an arc without requiring contact with, and the subsequent lifting from, the workpiece. As a result, the possibility of fusing the electrode prior to commencement of the welding operation decreases, spots on the workpiece are less likely, damage to sensitive materials (e.g., aluminum, titanium, etc.) is mitigated, and operators with lower levels of skill can consistently initiate a GTAW welding process.

Furthermore, performing a welding operation employing alternating current (AC) GTAW tools on a variety of materials, such as welding of specialized and/or thin sheet metals, like titanium, aluminum, copper, magnesium, or an alloy of one or more of the materials, may experience an unstable arc as the operation progresses. This can be caused due to insufficient stability of the arc between the electrode and the workpiece, as repeated arc ignition may be needed following arc discharge during reversal of the operating polarity. The laser generated hotspot and the resulting laser induced metal plasma serves to stabilize the arc, thereby enhancing weld consistency and quality.

In some additional or alternative examples, GTAW welding processes may employ both the disclosed laser arc initiation and/or stabilization technique in combination with HF energy.

As described more completely with respect to the several figures, a threshold value of laser intensity and/or power can be applied to the workpiece to initiate an arc and/or create a hotspot to stabilize the arc on the workpiece. Adding a low power laser (e.g., less than 1000 Watts) may be enough to initiate and/or stabilize the arc. Thus, the capital cost of a hybrid a GTAW welding solution employing a laser arc initiation system can be a cost effective solution.

Accordingly, the arc is initiated more easily and stability of the arc is greater than what is achieved with just an often manual arc welding process. As a result, the arc is achieved more readily, more stable during welding, thus creating a more consistent weld bead with less spatter.

As used herein, the term "welding-type power" refers to power suitable for welding, plasma cutting, induction heating, CAC-A and/or hot wire welding/preheating (including laser welding and laser cladding). As used herein, the term "welding-type power supply" and/or "power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, a "circuit" or "circuitry" includes any analog and/or digital components, power and/or control elements, such as a microprocessor, digital signal processor (DSP), software, and the like, discrete and/or integrated components, or portions and/or combinations thereof.

As used herein, the term "boost converter" is a converter used in a circuit that boosts a voltage. For example, a boost converter can be a type of step-up converter, such as a DC-to-DC power converter that steps up voltage while stepping down current from its input (e.g., from the starter battery) to its output (e.g., a load and/or attached power bus). It is a type of switched mode power supply.

As used herein, the term "buck converter" (e.g., a step-down converter) refers to a power converter which steps down voltage (e.g., while stepping up current) from its input to its output.

As used herein, the term "memory" includes volatile and non-volatile memory, and can be arrays, databases, lists, etc.

As used herein, the term "torch," "tool" or "welding-type tool" can include a hand-held or robotic welding torch, gun, or other device used to create the welding arc.

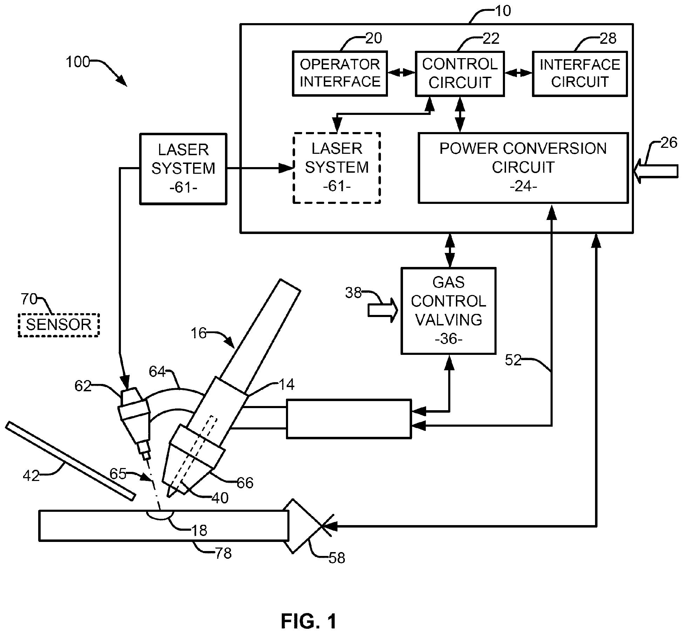

FIG. 1 illustrates an example arc welding system 100 for performing laser initiated GTAW welding operations. As shown in FIG. 1, a power supply 10 includes a gas tungsten arc welding (GTAW) tool 16, having a tungsten electrode 40 to generate an arc between the electrode 40 and a workpiece 78. A laser system 61 is configured to generate a laser beam 65 via a laser delivery system 62 (e.g., a laser output including one or more of fiber optics, filters, lenses, etc.), and to control the laser beam to focus the laser beam on a focal point over the workpiece 78 to heat the workpiece (e.g., to create a weld puddle, to generate a metal plasma column, etc.). Suitable laser power delivery may be process and/or material specific, and can be stored in memory as a list, accessible by the operator and/or the control circuitry 22.

In the illustrated example, the laser delivery system 62 is mounted to torch body 14 via a mounting device 64, which serves to fix the position and/or orientation of the laser delivery system 62 relative to the torch 16. This ensures the laser beam 65 is delivered to a desired location on the workpiece 78 when the torch 16 is positioned for a welding operation. In some examples, the laser delivery system 62 is removable from the torch 16, such that an existing torch can be retrofit to include the disclosed laser system and the associated benefits.

The system 10 also includes control circuitry configured to regulate power (e.g., to generate an arc) to the GTAW tool 16 to generate a metal plasma from a material of the workpiece to initiate and/or sustain an arc between the electrode 40 and the workpiece 78. For instance, power conversion circuitry 24 is connected to the control circuitry 22 and can be controlled to generate an alternating current (AC) output to regulate welding power to the GTAW tool 16.

As shown, a laser system 61 is provided, which may be connected to the power supply 10, integrated with the power supply 10, and/or otherwise linked to cooperate with operation of the power supply. The laser system 61 can receive power from the power conversion circuit 24, and/or have an independent power source. The control circuit 22 can send and/or receive information to and from the laser system 61, which may have a separate control circuit independent of control circuitry 22.

The laser system 61 controls a laser generator to generate a laser beam 65 to create a hotspot 18, generate a plasma, and initiate an arc between the workpiece 78 and the tungsten electrode 40. The laser system 61 is configured to cooperate with the tool 16 to and control circuitry 22 to ensure the arc is properly initiated and a desired stability is present with the arc during a welding operation, as disclosed herein.

In some examples, the laser beam 65 can be applied as an oscillating laser beam to control the laser to focus on a spot on the hotspot 18. The spot (at or within the hotspot) serves as an anode or cathode for the GTAW electrode, creating an electrode pathway between the workpiece and the electrode. For example, the distance between the laser beam and the location of the electrode at the weld puddle can be selected for improved arc stability. In examples, the laser beam oscillates at a frequency of about 25 Hz, with a diameter of about 3 mm, resulting in an effective zone for stimulating metal plasma. Within this effective zone, the laser beam can manipulate the arc anode or cathode position and create a plasma column for the arc.

The system 100 is configured to provide power and shielding gas to the torch 16. For example, power from the power supply is applied to the electrode 40 of the tool 16, typically by a welding cable 52. Similarly, shielding gas is fed through the welding cable 52 and/or a separate conduit 54.

In some examples, upon initiation of the welding process, gas flow may begin and power may be applied to the welding cable 52 and through the tool 16 to provide a power to generate an arc between the workpiece 78 and the electrode 40. A workpiece cable and clamp 58 allow for closing an electrical circuit from the power supply through the torch 16, the electrode 40, and the workpiece 78 for maintaining the welding arc during the operation. A filler material 42 can be introduced to hotspot 18 created at the workpiece by application of the arc.

The control circuit 22 is coupled to power conversion circuit 24. This power conversion circuit 24 is adapted to create the output power applied to the filler material 42 at the tool 16. Various power conversion circuits may be employed, including choppers, boost circuitry, buck circuitry, inverters, converters, and so forth. The configuration of such circuitry may be of types generally known in the art in and of itself. The power conversion circuit 24 is coupled to a source of electrical power as indicated by arrow 26. The power applied to the power conversion circuit 24 may originate in the power grid, although other sources of power may also be used, such as power generated by an engine-driven generator, batteries, fuel cells or other alternative sources. The power supply illustrated in FIG. 1 may also include an interface circuit 28 configured to allow the control circuit 22 to exchange signals with another system (e.g., gas control valving 36, laser system 61, a remote computer, sensors 70, etc.).

For example, the control circuit 32 may also be coupled to gas control valving 36, which regulates the flow of shielding gas to the tool 15. In general, such gas is provided at the time of welding, and may be turned on immediately preceding the weld and for a short time following the weld. The gas applied to the gas control valving 36 may be provided in the form of pressurized bottles, as represented by reference numeral 38.

In some examples, the welding system is configured for data settings to be selected by the operator and/or a welding sequence, such as via an operator interface 20 provided on the power supply 10. The operator interface 20 will typically be incorporated into a front faceplate of the power supply 10, and may allow for selection of settings such as the welding process, the type of filler material to be used, voltage and current settings, and so forth.

Additionally or alternatively, process instructions for welding can be provided via a weld sequence program, such as stored on a memory accessible to a processor/control circuit 22 associated with the power supply 10. In such a case, the sequencer can employ stored information (e.g., associated with a desired process, such as an arc initiation process, which can include historical data), and/or customizable by a user.

The control circuitry 22 will also be associated with memory which may consist of one or more types of permanent and temporary data storage, such as for providing the welding sequences implemented, storing the three-dimensional and thermal models, storing operational characteristics, storing weld settings, storing error logs, etc. The adjustment of the operational characteristics can be made by reference and/or comparison to historical data from preceding additive manufacturing operations, which can also be stored on memory circuit 86. For instance, adjustment may be made on the basis of stored data based on an historical analysis of a similar additive manufacturing operation. The historical data can correspond to, for example, operational parameters, other sensor data, a user input, as well as data related to trend analysis, threshold values, power values, welding profiles associated with a particular mode of operation, etc., and can be stored in a comparison chart, list, library, etc., accessible to the processing circuit 84.

Thus, the information can be used to control operation of the system to initiate or facilitate welding, such as by controlling a power output from the power supply 10. These weld settings are communicated to the control circuit 22 within the power supply.

The control circuit 22 operates to control generation of welding power output that is supplied to the tool 16 for carrying out the desired welding operation. In examples, the control circuit 22 may be adapted to regulate welding power to perform a weld.

In examples, the laser system 61 is configured to scan the laser beam 65 about the focal point on the workpiece as a hollow shaped beam. In some examples, the laser system is configured to scan the laser beam in a continuous pattern. The controller can adjust the laser power level, a spot size of the laser power, or a shape of the laser beam to adjust a power profile of the laser power at the focal point.

Moreover, the pattern or movement of the laser beam at the weld puddle cause the laser beam to trace a superimposed pattern on the weld puddle. The superimposed pattern can be one of a circle, an ellipse, a zigzag, a figure-8, a crescent, a triangle, a square, a rectangle, a nonlinear pattern, an asymmetrical pattern, a pause, or any combination thereof.

In some examples, a first set of laser characteristics (e.g., a particular beam shape, pattern, power, spot size, etc.) may be employed to initiate an arc, whereas a second set of laser characteristics may be employed to stabilize the arc. In some examples, the sets are the same or substantially similar.

Additionally or alternatively, one or more sensors 70 can measure operational parameters associated with operation of the system (e.g., current, voltage, inductance, phase, power, orientation, position, etc.). The sensed operational characteristic (e.g., voltage, current, temperature, etc.) can be provided to the control circuit 22 or other controller (e.g., a controller associated with a remote system, etc.) to further control the welding process. In some examples, the sensor 70 may include one or more of an infrared sensor, an ultrasound sensor, a mechanical sensor, a thermal sensor, an optical sensor, as a list of non-limiting examples. Similarly, sensor data from the various sensors can be fed back to the control circuitry 22 for analysis and control of the operational characteristics of the power supply 10 and/or the laser system 61.

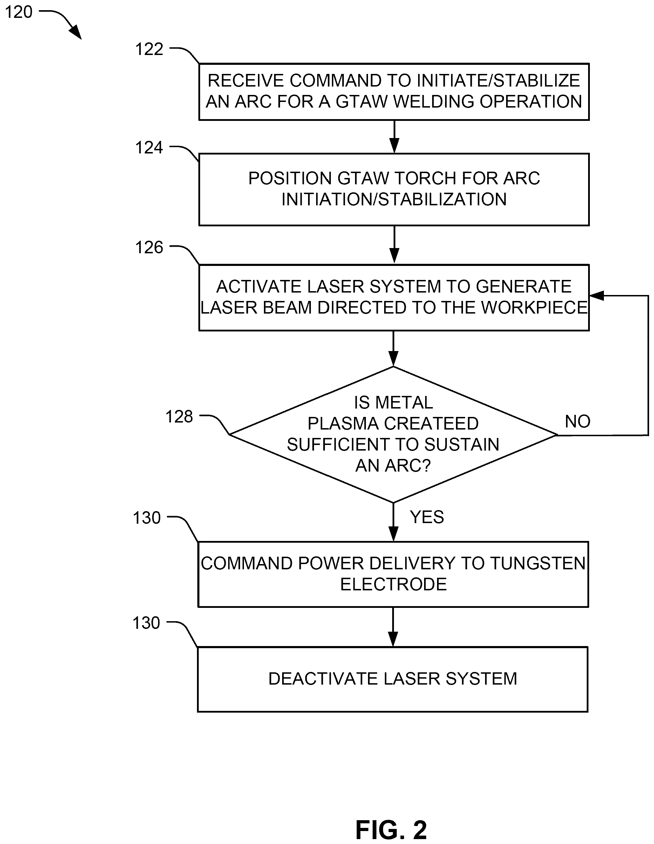

FIG. 2 illustrates a method 120 of initiating an arc for a GTAW welding system (e.g., system 100) employing a laser system (e.g., the laser system 61), as described with respect to FIG. 1.

In block 122, the system receives a command to initiate an arc to commence a GTAW welding operation. This command may be from a user input to the power supply, sensors indicating the torch has been triggered, and/or a manual command to the torch. In block 124, the torch and laser system (e.g., laser delivery system 62) are positioned relative to a workpiece in preparation for the welding operation.

In block 126, the laser system is activated to generate a laser beam and direct the laser beam from the laser delivery system to the workpiece. As the laser beam heats the workpiece at the desired location, a plasma column is created. When the operator and/or the system determines plasma column is sufficient to create (and/or sustain) an arc between the tungsten electrode and the workpiece (in block 128), the system commands power delivery from the power supply 10 to the electrode in block 130. Once the arc is generated/sustained between the electrode and the workpiece, the laser system can be deactivated during the welding operation, as shown in block 130.

As explained herein, the system and method can also be employed to enhance stability of an arc between the tungsten electrode 40 and the workpiece 78 during a GTAW welding operation. For example, the application of the laser beam 65 at the desired point of welding (e.g., hotspot or puddle 18) on the workpiece 78 serves to stabilize the arc by guiding an anode/cathode spot (for AC GTAW welding) or anode spot (for DC GTAW welding) associated with the arc welding on the weld puddle surface. The result is a controlled heat profile on a particular spot at the weld puddle, created by the laser beam 65, which enhances generation of metal plasma and causes current to flow from the tungsten electrode 40 to the hotspot 18 via the metal plasma. The benefits of such a technique include increased control and deposition rate, in particular during a welding process that employs Titanium, but also copper, alloys, and other metallic materials.

Application of the laser beam 65 can be consistent throughout the welding operation, periodic, and/or in response to a command (e.g., from the control circuitry 22 and/or laser system 61, in response to a selected weld schedule and/or data from the sensor 70).

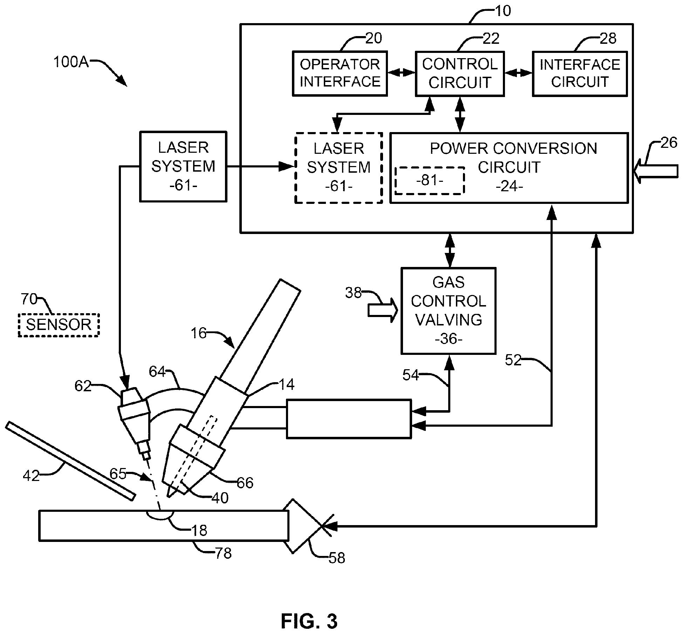

FIG. 3 illustrates another example GTAW welding system 100A. In the example of system 100A, a high-frequency power circuit 81 is included. As shown, the HF power circuit 81 can be integrated with the power conversion circuitry 24, and/or may be separate from and/or otherwise independent of power conversion circuitry 24.

In addition to the arc initiation and stabilization systems and methods disclosed with respect to FIGS. 1 and 2, the system 100A is configured to operate the laser system 61 to generate and apply the laser beam 65 in concert with the HF power circuit 81.

In order to enhance arc stability of an arc 43. As illustrated in FIGS. 6 through 10, the application of the laser beam 65 stabilizes the arc 43 by guiding the anode or cathode spot associated with the arc welding on the weld puddle surface. The result is a controlled heat profile at the weld puddle, while requiring a lower amount of both laser power and arc welding power. The benefits of such low power techniques are realized in the increased control and deposition rate, in particular during an additive manufacturing process that employs Titanium, but also copper, alloys, and other metallic materials.

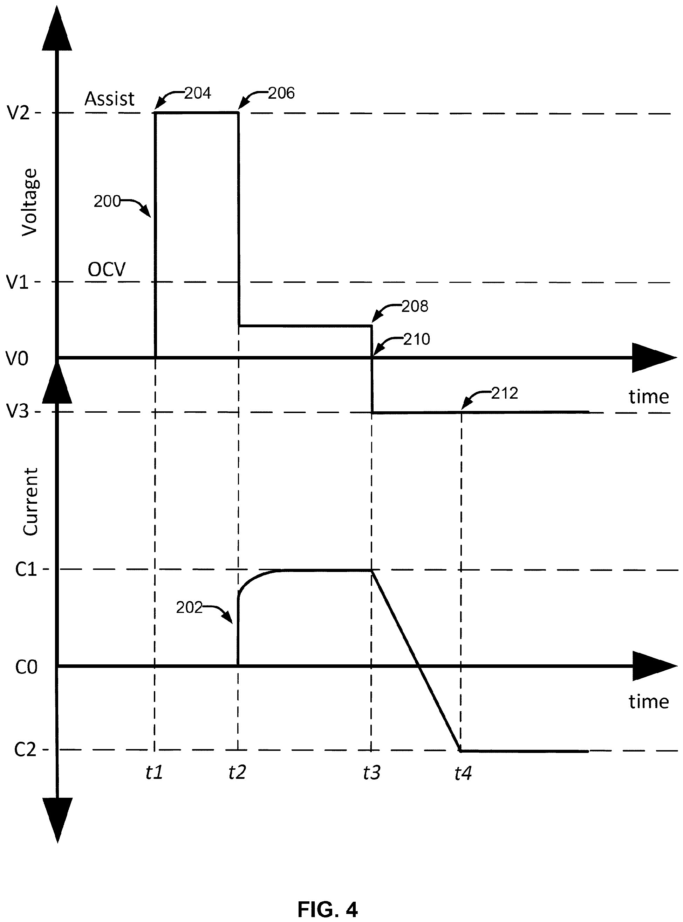

FIG. 4 shows the current and voltage waveforms associated with the HF power circuit 81 and power conversion circuitry 24, while controlling activation of the laser to initiate and/or sustain an arc, as disclosed herein. FIG. 4 shows an application employing both the laser system and a high-frequency power circuit to assist with arc initiation and/or stabilization techniques disclosed herein.

As shown, FIG. 4 provides voltage waveform 200 and current waveform 202 progressing with time. As shown, the HF power circuit is activated at t1 such that voltage increases from V0, past V1 (corresponding to an open circuit voltage (OCV)) to V2. Additionally or alternatively, the laser system is activated. If operated in tandem, the HF power and laser assist are both active and serve to heat the workpiece to create a plasma column for arc initiation at V2, indicated by reference numeral 204. At t2 indicated by reference numeral 206, the arc is initiated (e.g., the GTAW torch is powered for a welding operation), and the HF power and/or laser assist are deactivated.

The voltage drops, where the HF power and/or laser assist are again activated at t3 to stabilize the arc at reference numeral 208 as the voltage crosses V0 at reference numeral 210. After the zero crossing of the voltage, the HF power and/or laser assist are again deactivated.

With initiation of the GTAW power output, current increases from C0 to C1 at t2. The current is substantially maintained at C2 until the zero crossing at t3, causing the current to ramp down to C2. Once C2 is achieved at t4, the current is substantially maintained at C2. If another zero crossing occurs, activation of the HF power and/or laser assist in accordance with reference numerals 208 and 210 can be commanded in reverse.

Although described in FIG. 4 with respect to a zero crossing, the arc assist and/or stabilization techniques can be employed at any point during the welding process to ensure arc stability. For example, a sensor input and/or operator input can initiate an arc assist operation.

As disclosed herein, the laser assist GTAW welding system provides significant advantages over conventional technologies. For example, the ease with which a quality arc is initiated is increased, as well as the consistency of such an arc. Thus, scratch and/or lift off starts are obviated by the disclosed systems and methods. Further, employing the system to stabilize an arc (e.g., during changes in polarity) can enhance weld quality during the welding operation.

In some situations, a peak voltage required for arc striking and stabilizing is substantially decreased. Thus, handhold devices with an output of less than 15 kV (e.g., in accordance with ANSI/NEMA/IEC 60974-3:2021) can be successfully employed. In some situations, a peak electric charge in one half-cycle of impulse current used for arc striking and stabilizing devices can be substantially limited to less than 8 uC for handheld systems (e.g., in accordance with ANSI/NEMA/IEC 60974-3:2021). In some situations, the mean energy generated by arc striking and stabilizing devices can be substantially limited to 4 J for handheld systems (e.g., in accordance with ANSI/NEMA/IEC 60974-3:2021).

Advantageously, the disclosed systems and methods generate substantially less conducted and radiated electrical emissions associated with conventional HF arc striking and stabilizing devices, which have been historically prohibited from use in certain, sensitive facilities (e.g., nuclear power plants).

Although a single laser system generating a single laser beam is described with respect to FIGS. 1 and 3, the laser system 61 (or two or more laser systems) may be configured to generate two or more laser beams, which may be directed to different locations on the workpiece 78 (simultaneously or at varying times) to further control weld bead formation. Additionally or alternatively, two or more laser systems may be used, each laser system configured to generate one or more laser beams for controlling weld beam formation.

The present methods and systems may be realized in hardware, software, and/or a combination of hardware and software. Example implementations include an application specific integrated circuit and/or a programmable control circuit.

As utilized herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or." As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y and z." As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present method and/or system has been described with reference to certain implementations, it will be understood by those skilled in the art that various changes may be made and equivalents may be substituted without departing from the scope of the present method and/or system. For example, block and/or components of disclosed examples may be combined, divided, re-arranged, and/or otherwise modified. In addition, many modifications may be made to adapt a particular situation or material to the teachings of the present disclosure without departing from its scope. Therefore, the present method and/or system are not limited to the particular implementations disclosed. Instead, the present method and/or system will include all implementations falling within the scope of the appended claims, both literally and under the doctrine of equivalents.
Certain embodiments of the invention are described in the following clauses:
Clause 1. A system for initiating or stabilizing a welding arc, comprising:
   a gas tungsten arc welding (GTAW) tool comprising an electrode to generate an arc between the electrode and a workpiece;
   a laser system to:
      generate a laser beam; and
      control the laser beam on a focal point over the workpiece to generate a metal plasma column from a material of the workpiece; and
   control circuitry configured to regulate power to the GTAW tool to initiate or sustain an arc via the metal plasma between the electrode and the workpiece.
Clause 2. The system for initiating or stabilizing a welding arc of clause 1, further comprising power conversion circuitry, the control circuitry configured to control the power conversion circuitry to generate an alternating current (AC) output or a direct current (DC) output to regulate the power to the GTAW tool.
Clause 3. The system for initiating or stabilizing a welding arc of clause 2, wherein the laser system is configured to control generation of the laser beam to pulse in coordination with the AC output.
Clause 4. The system for initiating or stabilizing a welding arc of clause 3, wherein the laser system is configured to control generation of the laser beam to heat the substrate during a GTAW welding process.
Clause 5. The system for initiating or stabilizing a welding arc of clause 1, wherein the laser system is configured to control generation of the laser beam to heat the substrate prior to provision of power to the GTAW tool.
Clause 6. The system for initiating or stabilizing a welding arc of clause 1, further comprising high frequency power circuitry to generate a high frequency power output.
Clause 7. The system for initiating or stabilizing a welding arc of clause 6, wherein the control circuitry is further configured to control the high frequency power circuitry to generate and deliver the high frequency output concurrently with the laser beam.
Clause 8. The system for initiating or stabilizing a welding arc of clause 1, wherein the substrate comprises one or more of steel, aluminum or titanium.
Clause 9. The system for initiating or stabilizing a welding arc of clause 1, wherein a material of the electrode comprises one or more of tungsten, steel, titanium, copper, magnesium, or an alloy of one or more of the materials.
Clause 10. The system for initiating or stabilizing a welding arc of clause 1, wherein the laser system includes a laser delivery system to direct the laser beam toward the workpiece.
Clause 11. The system for initiating or stabilizing a welding arc of clause 10, wherein the laser delivery system is mounted to a body of the GTAW tool.
Clause 12. A laser system to initiate or stabilize a welding arc, comprising:
   a laser generator to generate a laser beam; and
   a laser controller to control focus of the laser beam on a focal point over a substrate to generate a metal plasma column from the substrate material,
   wherein the focal point attracts an arc from an electrode of a gas tungsten arc welding (GTAW) tool comprising an electrode to generate an arc between the electrode and a workpiece.
Clause 13. The laser system of clause 12, wherein the focal point corresponds to a laser irradiation spot to lock an anode or cathode position in the weld bead, thereby focusing the arc on the anode or cathode position.
Clause 14. The laser system of clause 12, wherein the laser beam is generated with a laser power of less than 1000 Watts.
Clause 15. The laser system of clause 12, wherein the laser controller is further configured to adjust at least one of a laser power level, a spot size of the laser power, or a shape of the laser beam to adjust a power profile of the laser power at the focal point.
Clause 16. The laser system of clause 12, wherein the laser system includes a laser delivery system mounted to the GTAW tool and configured to direct the laser beam toward the workpiece.
Clause 17. The laser system of clause 16, wherein the laser system is configured to adjust a position or orientation of one or more of the laser system or the laser delivery system to control the position of the focal point on the substrate.
Clause 18. The laser system of clause 16, wherein the laser delivery system is removable from the GTAW tool.
Clause 19. The laser system of clause 16, further comprising a sensor including one or more of an optical sensor, a laser scanner, an infrared sensor, an ultrasound sensor, a mechanical sensor, or a thermal sensor to collect information from one or more characteristics of the laser system or the arc welding system.
Clause 20. The laser system of clause 19, wherein the control circuitry is further configured to adjust the laser generator or the laser delivery system to control the laser beam based on measurements from the sensor.

## Claims

1. A system for initiating or stabilizing a welding arc, comprising:
a gas tungsten arc welding (GTAW) tool comprising an electrode to generate an arc between the electrode and a workpiece;
a laser system to:
generate a laser beam; and
control the laser beam on a focal point over the workpiece to generate a metal plasma column from a material of the workpiece; and
control circuitry configured to regulate power to the GTAW tool to initiate or sustain an arc via the metal plasma between the electrode and the workpiece.

2. The system for initiating or stabilizing a welding arc of claim 1, further comprising power conversion circuitry, the control circuitry configured to control the power conversion circuitry to generate an alternating current (AC) output or a direct current (DC) output to regulate the power to the GTAW tool.

3. The system for initiating or stabilizing a welding arc of claim 2, wherein the laser system is configured to control generation of the laser beam to pulse in coordination with the AC output.

4. The system for initiating or stabilizing a welding arc of claim 3, wherein the laser system is configured to control generation of the laser beam to heat the substrate during a GTAW welding process.

5. The system for initiating or stabilizing a welding arc of claim 1, wherein the laser system is configured to control generation of the laser beam to heat the substrate prior to provision of power to the GTAW tool.

6. The system for initiating or stabilizing a welding arc of claim 1, further comprising high frequency power circuitry to generate a high frequency power output, and optionally wherein the control circuitry is further configured to control the high frequency power circuitry to generate and deliver the high frequency output concurrently with the laser beam.

7. The system for initiating or stabilizing a welding arc of claim 1, wherein the substrate comprises one or more of steel, aluminum or titanium, or
wherein a material of the electrode comprises one or more of tungsten, steel, titanium, copper, magnesium, or an alloy of one or more of the materials.

8. The system for initiating or stabilizing a welding arc of claim 1, wherein the laser system includes a laser delivery system to direct the laser beam toward the workpiece, and optionally
wherein the laser delivery system is mounted to a body of the GTAW tool.

9. A laser system to initiate or stabilize a welding arc, comprising:
a laser generator to generate a laser beam; and
a laser controller to control focus of the laser beam on a focal point over a substrate to generate a metal plasma column from the substrate material,
wherein the focal point attracts an arc from an electrode of a gas tungsten arc welding (GTAW) tool comprising an electrode to generate an arc between the electrode and a workpiece.

10. The laser system of claim 9, wherein the focal point corresponds to a laser irradiation spot to lock an anode or cathode position in the weld bead, thereby focusing the arc on the anode or cathode position.

11. The laser system of claim 9, wherein the laser beam is generated with a laser power of less than 1000 Watts, or
wherein the laser controller is further configured to adjust at least one of a laser power level, a spot size of the laser power, or a shape of the laser beam to adjust a power profile of the laser power at the focal point.

12. The laser system of claim 9, wherein the laser system includes a laser delivery system mounted to the GTAW tool and configured to direct the laser beam toward the workpiece.

13. The laser system of claim 12, wherein the laser system is configured to adjust a position or orientation of one or more of the laser system or the laser delivery system to control the position of the focal point on the substrate.

14. The laser system of claim 12, wherein the laser delivery system is removable from the GTAW tool.

15. The laser system of claim 12, further comprising a sensor including one or more of an optical sensor, a laser scanner, an infrared sensor, an ultrasound sensor, a mechanical sensor, or a thermal sensor to collect information from one or more characteristics of the laser system or the arc welding system, and optionally
wherein the control circuitry is further configured to adjust the laser generator or the laser delivery system to control the laser beam based on measurements from the sensor.
